# EUROPEAN PATENT APPLICATION

(11) **EP 4 502 231 A1**
(43) Date of publication of application: **05.02.2025**
(21) Application number: 22935293.5
(22) Date of filing: 30.03.2022
(51) Int. Cl.: C23C 22/00, C21D 8/12, C21D 9/46, C22C 38/00, C23C 22/74, C23C 22/77, H01F 1/147

(54) **METHOD FOR MANUFACTURING ORIENTED ELECTROMAGNETIC STEEL SHEET, AND ORIENTED ELECTROMAGNETIC STEEL SHEET**

(71) Applicant: NIPPON STEEL CORPORATION, Chiyoda-ku Tokyo 100-8071 (JP)
(72) Inventor: ARAI, Satoshi, Tokyo 100-0006 (JP); HAMAMURA, Hideyuki, Tokyo 100-8071 (JP); SUGIYAMA, Kimihiko, Tokyo 100-8071 (JP); IWAKI, Masataka, Tokyo 100-8071 (JP)
(74) Representative: Vossius & Partner Patentanwälte Rechtsanwälte mbB
(86) International application number: PCT/JP2022/016106
(87) International publication number: WO 2023/188148

(57) **Abstract**

This method for manufacturing a grain-oriented electrical steel sheet includes: a cold rolling step of manufacturing a cold-rolled steel sheet; a final annealing step of performing final annealing accompanied by secondary recrystallization on the cold-rolled steel sheet; a groove forming step of linearly forming a groove in a direction intersecting a rolling direction of the cold-rolled steel sheet with respect to the cold-rolled steel sheet before or after the final annealing step; and a tension coating applying step of forming a tension coating on a groove forming surface by applying and baking a coating solution containing a compound of phosphoric acid, phosphate, chromic anhydride, chromate, alumina, or silica, in a state where the groove forming surface of the cold-rolled steel sheet faces downward.

## Description

### Technical Field of the Invention

The present invention relates to a method for manufacturing a grain-oriented electrical steel sheet and a grain-oriented electrical steel sheet.

### Related Art

A grain-oriented electrical steel sheet is used in many electric devices as a magnetic core. The grain-oriented electrical steel sheet is a steel sheet in which 0.8% to 4.8% of Si is contained and the crystal orientation of the product is highly concentrated in a { 110 }<001 > orientation. As the magnetic characteristics, the grain-oriented electrical steel sheet is required to have a high magnetic flux density represented by B₈ value and a low iron loss represented by W17/50. In particular, recently, there is an increasing demand for a reduction in power loss from the viewpoint of energy saving.

In response to this demand, a technology for refining magnetic domains has been developed to reduce an iron loss in a grain-oriented electrical steel sheet. Hereinafter, such a technology, that is, a technology for refining magnetic domains is referred to as a "magnetic domain control technology", and an effect of the magnetic domain control technology is also referred to as a "magnetic domain control effect".

For example, a method for refining magnetic domains and reducing an iron loss by irradiating a steel sheet after final annealing with a laser beam is disclosed in Patent Document 1. However, since the reduction in iron loss according to this method is by strain introduced by the laser irradiation, the method cannot be used for a wound core transformer that requires stress relief annealing (SRA) after forming the transformer core.

That is, a wound core transformer mainly used for a medium and small transformer is often manufactured by, for example, a core manufacturing method by mechanical bending. In this manufacturing method, stress relief annealing (for example, at 800°C for about 2 to 4 hours) is generally performed in order to eliminate iron loss deterioration due to processing strain introduced by bending. Such stress relief annealing eliminates strain introduced for magnetic domain refinement. Therefore, the method for refining magnetic domains by introducing strain cannot be applied to a wound core transformer.

As an SRA-resistant magnetic domain control technology in which a magnetic domain control effect is not lost even when the above-described stress relief annealing is performed, a "groove introduction type magnetic domain control technology" in which linear grooves are periodically formed in a direction intersecting a rolling direction is widely known. As such a groove introduction type magnetic domain control technology, a groove forming technology by machining, a groove forming technology by etching, a groove forming technology by laser irradiation, and the like are known. For example, Patent Document 2 discloses a groove forming technology by laser irradiation. However, these groove forming methods alone cannot sufficiently meet the demand for iron loss improvement that has been increasing in recent years.

On the other hand, as disclosed in Patent Document 3, a technology for forming an insulating coating on a surface of a steel sheet on which grooves are formed (that is, a groove forming surface) has been proposed. Specifically, Patent Document 3 describes that an insulating coating made of colloidal silica and magnesium phosphate is formed on a groove forming surface of a steel sheet.

In addition, Patent Document 4 proposes a technology for improving adhesion between a base steel sheet and an insulating coating in a groove of a steel sheet having grooves formed on its surface. Specifically, Patent Document 4 describes that an insulating coating liquid containing, for example, colloidal silica and phosphate is applied to a specific element concentrated portion formed on the inner surface of the groove and the inner surface of the groove of the steel sheet after formation of the specific element concentrated portion, and baked to form an insulating coating of the outermost layer.

### Citation List

### Patent Document

Patent Document 1: Japanese Examined Patent Application, Second Publication No. S58-26405
Patent Document 2: Japanese Patent No. 4384451
Patent Document 3: Japanese Patent No. 5742294
Patent Document 4: Japanese Unexamined Patent Application, First Publication No. 2017-95745

### Summary of Invention

### Problems to be Solved by the Invention

However, it has been found that when an insulating coating is formed as in the technologies disclosed in Patent Document 3 and Patent Document 4, insulation may be insufficient due to coating defects, and iron loss may not be sufficiently improved.

The present invention has been made in view of the above problems, and an object of the present invention is to provide a method for manufacturing a grain-oriented electrical steel sheet and a grain-oriented electrical steel sheet capable of manufacturing a grain-oriented electrical steel sheet with few coating defects and a low iron loss.

### Means for Solving the Problem

Aspects of the present invention are as follows.
(1) One aspect of the present invention is a method for manufacturing a grain-oriented electrical steel sheet, the method including: a cold rolling step of manufacturing a cold-rolled steel sheet; a final annealing step of performing final annealing accompanied by secondary recrystallization on the cold-rolled steel sheet; a groove forming step of linearly forming a groove in a direction intersecting a rolling direction of the cold-rolled steel sheet with respect to the cold-rolled steel sheet before or after the final annealing step; and a tension coating applying step of forming a tension coating on a groove forming surface by applying and baking a coating solution containing a compound of phosphoric acid, phosphate, chromic anhydride, chromate, alumina, or silica, in a state where the groove forming surface of the cold-rolled steel sheet faces downward.
(2) In the method for manufacturing a grain-oriented electrical steel sheet according to (1), in the tension coating applying step, the thickness of the tension coating may be adjusted such that the thickness of the tension coating formed inside the groove is 1/2 or less of the depth of the groove, and is twice or less of the thickness of the tension coating formed on a flat surface of the cold-rolled steel sheet.
(3) The method for manufacturing a grain-oriented electrical steel sheet according to (1) or (2) may further include an annealing separator applying step of applying an annealing separator to the cold-rolled steel sheet after the cold rolling step and before the final annealing step, and the annealing separator may contain magnesia.
(4) Another aspect of the present invention is a grain-oriented electrical steel sheet manufactured by the method for manufacturing a grain-oriented electrical steel sheet according to any one of (1) to (3).

### Effects of the Invention

According to the above aspect of the present invention, it is possible to obtain a grain-oriented electrical steel sheet with few coating defects and a low iron loss.

### Brief Description of the Drawings

FIG. 1 is a flowchart for explaining an example of a method for manufacturing a grain-oriented electrical steel sheet according to the present embodiment.
FIG. 2 is a plane view showing grooves formed in a final-annealed steel sheet.
FIG. 3 is a schematic cross-sectional view for explaining a configuration in the vicinity of a groove of a grain-oriented electrical steel sheet.
FIG. 4 is a schematic cross-sectional view for explaining a configuration in the vicinity of a groove of a grain-oriented electrical steel sheet according to a modification example.
FIG. 5 is a schematic cross-sectional view for explaining the method for manufacturing a grain-oriented electrical steel sheet according to the present embodiment, particularly a tension coating applying step.
FIG. 6 is a schematic cross-sectional view for explaining a problem of a conventional method for manufacturing a grain-oriented electrical steel sheet.
FIG. 7 is an SEM photograph for explaining the problem of a conventional method for manufacturing a grain-oriented electrical steel sheet.

### Embodiment(s) of the Invention

Hereinafter, preferred embodiments of the present invention will be described in detail with reference to the accompanying drawings. Note that a numerical range represented using "to" in the present embodiment means a range including numerical values described before and after "to" as a lower limit and an upper limit. "%" means mass % unless otherwise specified.

The present inventors have studied a technology for forming an insulating coating on a groove forming surface of a steel sheet. Here, the insulating coating reduces iron loss by applying tension in the steel sheet surface. From such a viewpoint, the insulating coating in the present embodiment may also be referred to as tension coating.

For example, as disclosed in Patent Document 3 or Patent Document 4, there is already a technology for forming an insulating coating on a groove forming surface of a steel sheet. However, in the technologies proposed so far, insulation may be insufficient due to coating defects of the grain-oriented electrical steel sheet, and iron loss cannot be sufficiently reduced.

The present inventors have considered that the reason is in the step of forming an insulating coating. Although details will be described later, conventionally, a coating solution was applied to a groove forming surface of a steel sheet in a state where the groove forming surface is "directed upward", and baking was performed. Therefore, the coating solution easily gathers in the groove. That is, a part of the coating solution applied to the groove forming surface is retained inside the groove in a liquid reservoir state. When baking is performed in this state, the insulating coating inside the groove is formed to be thicker than the insulating coating in the other portion (flat surface).

As described above, the insulating coating inside the groove tends to be formed excessively thicker than the insulating coating on the flat surface. Then, the insulating coating formed to be excessively thick is easily peeled off from the steel sheet as a base metal. That is, it is considered that the insulating coating formed inside the groove is easily peeled off, and as a result, insulation becomes insufficient, and iron loss cannot be sufficiently reduced in some cases.

Meanwhile, in a grain-oriented electrical steel sheet on which grooves are formed, a magnetic flux that has reached one groove wall through the steel sheet leaks from the wall (that is, due to leakage of magnetic flux), thereby increasing magnetostatic energy, and the main magnetic domain is refined to reduce the magnetostatic energy, which causes a magnetic domain control effect. However, in a state where tension is not applied to the steel sheet, a closure type magnetic domain is generated in the vicinity of the groove wall surface, and the increase in the magnetostatic energy described above is suppressed, so that a sufficient magnetic domain control effect is not exhibited. Due to the isotropic tension by the insulating coating, theclosure magnetic domain becomes energetically unstable (due to the inverse effect of magnetostriction), so that the leakage of the magnetic flux is restored and the magnetic domain control effect is improved. It is considered that the insulating coating formed thick in the groove part is easily peeled off, so that a sufficient tension effect cannot be applied to the steel sheet, or a stress in a direction in which the closure magnetic domain becomes unstable cannot be applied to the steel sheet.

In particular, when the coating solution is applied to the groove forming surface of the steel sheet, the steel sheet is provided with a catenary recessed upward (in other words, projected downward) by gravity. In this case, a liquid reservoir is easily formed in the groove, and a thicker insulating coating is formed inside the groove. Therefore, the insulating coating formed inside the groove is easily peeled off, and the effect of reducing iron loss is greatly impaired.

Based on the above examination, the present inventors have found that adopting a method of applying a coating solution to a groove forming surface of a steel sheet in a state where the groove forming surface is "directed downward" and performing baking is effective for thinning an insulating coating formed inside the groove, and as a result, it is possible to manufacture a grain-oriented electrical steel sheet with few coating defects and a low iron loss.

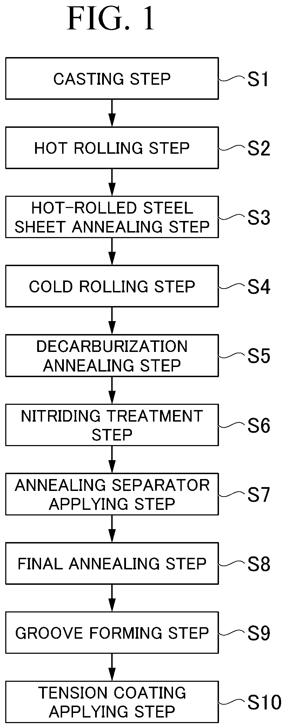

Hereinafter, a method for manufacturing a grain-oriented electrical steel sheet according to an embodiment of the present invention (and a grain-oriented electrical steel sheet obtained thereby) will be described with reference to the flowchart shown in FIG. 1.

Note that the flowchart shown in FIG. 1 is merely an example of the method for manufacturing a grain-oriented electrical steel sheet according to the present embodiment, and may be arbitrarily changed within a range not impairing the effects of the present embodiment.

That is, the method for manufacturing a grain-oriented electrical steel sheet according to the present embodiment may include a cold rolling step of manufacturing a cold-rolled steel sheet; a final annealing step of performing final annealing accompanied by secondary recrystallization on the cold-rolled steel sheet; a groove forming step of linearly forming a groove in a direction intersecting a rolling direction of the cold-rolled steel sheet with respect to the cold-rolled steel sheet before or after the final annealing step; and a tension coating applying step of forming a tension coating on a groove forming surface by applying and baking a coating solution containing a compound of phosphoric acid, phosphate, chromic anhydride, chromate, alumina, or silica, in a state where the groove forming surface of the cold-rolled steel sheet faces downward.

### (Casting step S1)

In a casting step S1, a slab is prepared. An example of a method for manufacturing the slab is as follows. First, molten steel is manufactured (melted). Subsequently, a slab is manufactured using the molten steel. The method for manufacturing the slab is not particularly limited, and the slab may be manufactured by, for example, a continuous casting method. An ingot may be manufactured using the molten steel, and the ingot may be subjected to bloom rolling to manufacture a slab. The thickness of the slab is not particularly limited. The thickness of the slab may be, for example, 150 mm to 350 mm. The thickness of the slab is preferably 220 mm to 280 mm. As the slab, a so-called thin slab with a thickness of 10 mm to 70 mm may be used. In a case where the thin slab is used, rough rolling before finish rolling can be omitted in a hot rolling step S2.

The composition of the slab may be any composition that causes secondary recrystallization. Specifically, the base elements and optional elements of the slab are as follows. The notation of % used for the component means mass %.

Si is an important element for increasing electrical resistance and reducing iron loss. When the Si content exceeds 4.8%, the material tends to crack during cold rolling, and rolling cannot be performed. On the other hand, when the amount of Si is lowered, α to γ transformation occurs during final annealing and the directionality of crystals is impaired. Therefore, 0.8%, which does not affect the directionality of crystals during final annealing, may be set as the lower limit. Therefore, the Si content may be 0.8% to 4.8%.

Although C is an element effective in controlling the primary recrystallization structure in the manufacturing process, an excessive content of C in the final product may have an adverse influence on the magnetic characteristics. Therefore, the C content may be set to 0.085% or less. A preferable upper limit of the C content is 0.080%. C is purified in a decarburization annealing step S5 and a final annealing step S8 described later, and reaches an amount of 0.005% or less after the final annealing step S8. When the slab contains C, the lower limit of the C content may exceed 0% or may be 0.001% in consideration of productivity in industrial production.

Acid-soluble Al is an element that is bonded to N and functions as an inhibitor as AIN or (Al,Si)N. The content of the acid-soluble Al may be 0.012% to 0.050%, at which the magnetic flux density is increased.

When N is added in an amount of 0.01 % or more during steelmaking, vacancies called blister are generated in the steel sheet, so that the upper limit of the N content may be 0.01%. Since N can be contained by nitriding in the middle of the manufacturing process, the lower limit thereof is not particularly limited and may be 0%. However, since the detection limit of N is 0.0001%, the substantial lower limit is 0.0001 %.

Mn and S precipitate as MnS and serve as inhibitors. When the Mn content is less than 0.02% and the S content is less than 0.005%, there is a possibility that a predetermined amount of effective MnS inhibitor cannot be secured. In addition, when the Mn content is more than 0.3% and the S content is more than 0.04%, there is a possibility that solutionizing at the time of heating the slab becomes insufficient, and secondary recrystallization is not stably performed. Therefore, the Mn content may be 0.02 to 0.3% and the S content may be 0.005 to 0.04%.

As other inhibitor constituent elements, B, Bi, Se, Pb, Sn, Ti, and the like can also be added to the slab. The addition amounts thereof may be appropriately adjusted, and the upper limit of the B content may be 0.080%, the upper limit of the Bi content may be 0.010%, the upper limit of the Se content may be 0.035%, the upper limit of the Pb content may be 0.10%, the upper limit of the Sn content may be 0.10%, and the upper limit of the Ti content may be 0.015%. Since these optional additive elements may be contained in the slab according to a known purpose, it is not necessary to set a lower limit for the content of the optional additive elements, and for example, the lower limit may be 0%.

The remainder of the chemical composition of the slab consists of Fe and impurities. It should be noted that the "impurities" mentioned here mean components that are mixed to the slab due to a raw material such as ore or scrap, or various factors of the manufacturing process, when the slab is industrially manufactured, and are acceptable within a range not substantially affecting the grain-oriented electrical steel sheet according to the present embodiment.

Known optional elements may be contained (added) in the slab instead of a portion of Fe, in consideration of, in addition to solving the manufacturing problems, enhancing the function of inhibitors by the formation of a compound, or an influence on the magnetic characteristics. Examples of the optional elements contained in the slab instead of a portion of Fe include Cu, P, Sb, Cr, Ni, and the like. Any one or more of these may be added to the slab. The upper limit of the Cu content may be 0.40%, the upper limit of the P content may be 0.50%, the upper limit of the Sb content may be 0.10%, the upper limit of the Cr content may be 0.30%, and the upper limit of the Ni content may be 1.00%. Since these optional elements may be contained in the slab according to a known purpose, it is not necessary to set a lower limit of the content of the optional additive element, and the lower limit may be 0%.

The chemical composition of the slab can be measured using inductively coupled plasma-atomic emission spectrometry (ICP-AES). Specifically, the chemical composition is specified by measuring a 35 mm square test piece collected from the slab under conditions based on a calibration curve prepared in advance by ICPS-8100 (a measuring device) manufactured by Shimadzu Corporation or the like. C and S can be measured using a combustion-infrared absorption method, and N can be measured using an inert gas fusion-thermal conductivity method.

### (Hot Rolling Step S2)

The hot rolling step S2 is a step of performing hot rolling on the slab heated to a predetermined heating temperature (for example, 1100°C to 1400°C) to obtain a hot-rolled steel sheet. The heating temperature at the time of hot rolling may be, for example, 1100°C or higher from the viewpoint of securing a temperature for hot rolling, and further may be 1280°C or lower from the viewpoint that solutionizing of AlN that is an inhibitor component is incompletely achieved. When AlN and MnS are used as main inhibitors, the heating temperature at the time of hot rolling may be 1300°C or higher at which these inhibitor components are completely solutionized.

### (Hot-Rolled Steel Sheet Annealing Step S3)

A hot-rolled steel sheet annealing step S3 is a step of annealing the hot-rolled steel sheet obtained in the hot rolling step S2 immediately or in a short period of time to obtain an annealed steel sheet. The annealing may be performed in a temperature range of 750°C to 1200°C for 30 seconds to 30 minutes. This annealing is effective for enhancing the magnetic characteristics of the product.

### (Cold Rolling Step S4)

A cold rolling step S4 is a step of performing cold rolling (for example, with a total cold-rolling reduction of 80% to 95%) once or a plurality of (two or more) times with annealing (process annealing) on the annealed steel sheet obtained in the hot-rolled steel sheet annealing step S3 to obtain a cold-rolled steel sheet. The thickness of the cold-rolled steel sheet may be, for example, 0.10 mm to 0.50 mm.

### (Decarburization Annealing Step S5)

The decarburization annealing step S5 is a step of performing decarburization annealing on the cold-rolled steel sheet obtained in the cold rolling step S4 to obtain a decarburization annealed steel sheet in which primary recrystallization has occurred (cold-rolled steel sheet subjected to the decarburization annealing step). The decarburization annealing may be performed, for example, at 700°C to 900°C for 1 minute to 3 minutes.

By performing decarburization annealing on the cold-rolled steel sheet, the C component contained in the cold-rolled steel sheet is removed. The decarburization annealing is preferably performed in a moist atmosphere in order to remove the C component contained in the cold-rolled steel sheet.

### (Nitriding Treatment Step S6)

A nitriding treatment step S6 is a step performed as necessary in order to adjust the strength of the inhibitor in the secondary recrystallization. The nitriding treatment is a treatment for increasing the amount of nitrogen in the cold-rolled steel sheet by about 40 ppm to 200 ppm from the start of the decarburization annealing step to the start of the secondary recrystallization in the final annealing step. Examples of the nitriding treatment include a treatment of annealing the decarburization annealed steel sheet in an atmosphere containing a gas having nitriding ability such as ammonia, a treatment of applying an annealing separator containing a powder having nitriding ability such as MnN to the decarburization annealed steel sheet in an annealing separator applying step S7 described later, and the like.

### (Annealing Separator Applying Step S7)

The annealing separator applying step S7 is a step of applying an annealing separator to the decarburization annealed steel sheet. As the annealing separator, for example, an annealing separator primarily containing alumina (Al₂O₃) can be used. The decarburization annealed steel sheet to which the annealing separator has been applied is subjected to final annealing in the next final annealing step S8 in a state of being wound in a coil shape.

In the case of forming a glass coating containing Mg₂SiO₄, an annealing separator primarily containing magnesia (MgO) is used.

### (Final Annealing Step S8)

The final annealing step S8 is a step of performing final annealing on the decarburization annealed steel sheet coated with the annealing separator to cause secondary recrystallization. In the final annealing step S8 accompanied by the secondary recrystallization, the secondary recrystallization is progressed in a state where the growth of the primary recrystallized grains is suppressed by the inhibitor, whereby the { 100}<001> oriented grains are preferentially grown and the magnetic flux density is dramatically improved.

When magnesia (MgO) is applied in the above annealing separator applying step S7, a glass coating containing Mg₂SiO₄ is formed by the final annealing step S8. In the present embodiment, such a glass coating is also included in the base steel sheet (final-annealed steel sheet described later). Thus, for example, when a glass coating is formed on the final-annealed steel sheet, the "surface of the final-annealed steel sheet" shall mean the surface of the glass coating. It is expected that the characteristics of a grain-oriented electrical steel sheet 200 are further enhanced by forming the glass coating.

### (Groove Forming Step S9)

The groove forming step S9 is a step of forming a groove on the steel sheet after the final annealing step S8 (final-annealed steel sheet) for the purpose of magnetic domain control (magnetic domain refinement). The groove can be formed by a known method such as a laser, an electron beam, plasma, a mechanical method, or etching.

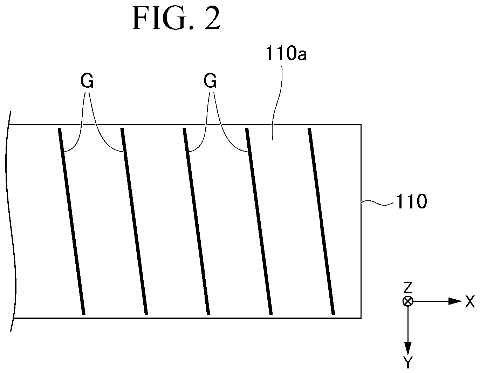

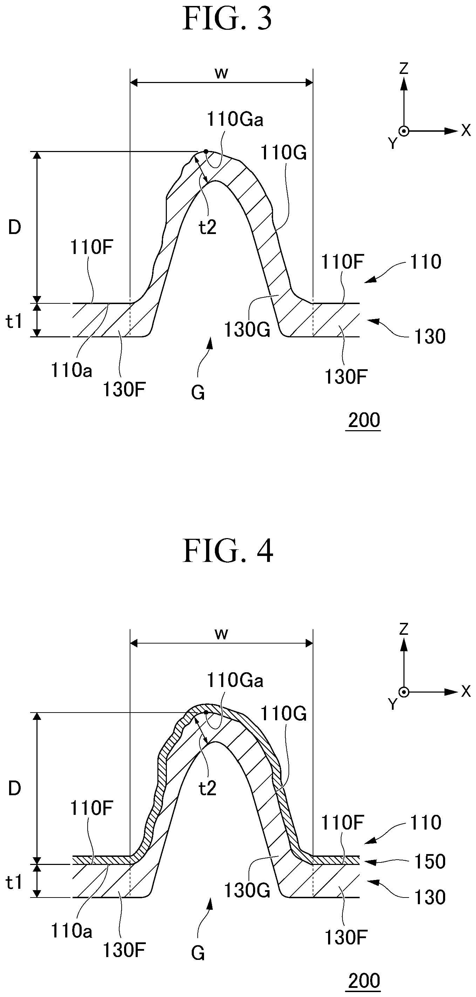

An example of the groove forming step S9 will be described with reference to FIGS. 2, 3, and 4. FIG. 2 is a plane view showing a groove G formed on a final-annealed steel sheet (base steel sheet) 110, and FIG. 3 is a schematic cross-sectional view for explaining a configuration in the vicinity of the groove G of the grain-oriented electrical steel sheet 200. FIG. 4 is a schematic cross-sectional view showing a modification example of the grain-oriented electrical steel sheet 200. The cross sections in FIGS. 3 and 4 are cross sections perpendicular to the extension direction of the groove G.

In FIG. 2, the rolling direction of the final-annealed steel sheet 110 is defined as the X axis, the width direction of the final-annealed steel sheet 110 is defined as the Y axis, and the sheet thickness direction of the final-annealed steel sheet 110 is defined as the Z axis. A direction from the groove forming surface 110a (The surface on which the groove G is formed. Details will be described later.) of the final-annealed steel sheet 110 toward the other surface is a positive direction of the Z-axis direction. The same applies to the definition of the XYZ axes shown in other drawings.

In FIG. 3, a final-annealed steel sheet 110 and an insulating coating (tension coating) 130 are illustrated. That is, the grain-oriented electrical steel sheet 200 according to the present embodiment includes the final-annealed steel sheet 110 and the insulating coating 130. The insulating coating 130 is formed on the groove forming surface 110a of the final-annealed steel sheet 110 by a tension coating applying step S10 described later.

As described above, the groove G is formed on the final-annealed steel sheet 110 by a known method such as a laser, an electron beam, plasma, a mechanical method, or etching. Of the front and back surfaces of the final-annealed steel sheet 110, the surface on which the groove G is formed is also referred to as the groove forming surface 110a. A portion of the groove forming surface 110a where the groove G is not formed is a flat surface 110F.

The groove G is formed on the upper surface of the final-annealed steel sheet 110, but not on the lower surface. However, in the tension coating applying step S10 to be described later, the coating solution is applied to the groove forming surface 110a in a state where the groove G is "directed downward". Therefore, the groove G may be formed on the lower surface of the final-annealed steel sheet 110.

The form of the groove G is preferably in the following range in relation to the effect of the present embodiment. In specifying the form of the groove G, it is necessary to perform cross-section observation of the groove G. **In** this case, an arbitrary cross section perpendicular to the extension direction of the groove G may be formed into a mirror surface by machining, and this cross section may be observed as an observed cross section with a scanning electron microscope or the like.

The extension direction of the groove G in plane view is preferably in the range of 90° to 60°, further preferably in the range of 90° to 75° with respect to the X-axis direction (rolling direction) from the viewpoint of iron loss reduction.

When the extension direction of the groove G is 60° or more with respect to the rolling direction X, the angle between the groove wall surface 110G, which is the wall surface of the groove G, and the rolling direction also increases, and thus the need to act the effect of the present embodiment increases. That is, since more magnetic flux leaks from the groove G, it is necessary to make these magnetic fluxes more likely to leak. That is, the need to thin the insulating coating 130G inside the groove increases.

The pitch of the grooves G in the rolling direction (rolling direction pitch) is preferably set in a range of 1 to 20 mm according to the need for magnetic domain refinement. The rolling direction pitch of the grooves G is further preferably set in a range of 2 to 10 mm. The upper limit of the pitch of the grooves G in the rolling direction is more preferably 8 mm. The upper limit of the pitch of the grooves G in the rolling direction is further preferably 5 mm.

The rolling direction pitch may be measured by, for example, the following method. That is, attention is paid to a set of arbitrary grooves G adjacent in plane view. Next, the distance in the rolling direction between the center points in the width direction of the grooves G is measured at several points, and the average value thereof may be set as the rolling direction pitch of the set of grooves G. In the present embodiment, the arbitrary rolling direction pitch measured in this manner is preferably a value within a range of 2 to 10 mm.

The width w of the groove G is preferably 20 µm or more, and more preferably 30 µm or more. This is because it is technically simple to control the thickness of the insulating coating 130G inside the groove when the width w is 20 µm or more.

The width w is a separation distance between two flat surfaces 110F adjacent to each other in the rolling direction via the groove G in a direction perpendicular to the extension direction of the groove G and the sheet thickness direction (Z-axis direction).

The width w of the groove G is preferably 150 µm or less, and more preferably 90 µm or less. When the width w of the groove G is 150 µm or less, it is suitable from the viewpoint of magnetic domain refinement. In addition, as the width w decreases, the problem of an increase in iron loss due to the angular difference between the magnetization direction of the grain-oriented electrical steel sheet 200 and the tension direction along the groove wall surface 110G by the insulating coating 130G inside the groove becomes remarkable although the problem also depends on the depth D of the groove G. Therefore, the need to thin the insulating coating 130 increases. For this reason, the width w of the groove G is preferably 150 µm or less.

The depth D of the groove G is preferably 5 µm or more, and more preferably 15 µm or more. When the depth D is 5 µm or more, the problem of an increase in iron loss due to the angular difference between the magnetization direction of the grain-oriented electrical steel sheet 200 and the tension direction along the groove wall surface 110G by the insulating coating 130G inside the groove becomes remarkable although the problem also depends on the width w. Therefore, the need to thin the insulating coating 130 increases. For this reason, the depth D of the groove G is preferably 5 µm or more.

The depth D is a distance (depth direction distance) in the sheet thickness direction (Z-axis direction) from the bottom surface 110Ga of the groove G (the deepest portion of the observed cross section of the groove G) to the flat surface 110F adjacent to the groove G.

The depth D of the groove G is preferably 50 µm or less, and more preferably 30 µm or less. This is because when the depth D of the groove G is 50 µm or less, it is technically easy to control a thickness t2 of the insulating coating 130G inside the groove. In addition, when the depth D of the groove G exceeds 50 µm, there are cases where the sheet thickness of the final-annealed steel sheet 110 is partially greatly reduced and the iron loss reduction effect cannot be obtained.

The groove forming step S9 is performed after the final annealing step S8 in the example shown in the flowchart of FIG. 1. However, the groove forming step S9 may be performed on the steel sheet that has undergone the cold rolling step S4 (that is, the cold-rolled steel sheet). Also in this case, the cross-sectional shape of a linear groove G ideal for magnetic domain refinement can be maintained. Therefore, the timing of performing the groove forming step S9 may be before or after the final annealing step S8. However, it is necessary to perform the groove forming step S9 at least before the tension coating applying step S10.

In the modification example shown in FIG. 4, the final-annealed steel sheet 110 has a glass coating 150. The glass coating 150 contains Mg₂SiO₄. However, even in this case, the definition and determination method of the parameter (width w, depth D, etc.) related to the groove G are not changed.

### (Tension Coating Applying Step S10)

The tension coating applying step S10 is a step of forming the insulating coating (tension coating) 130 on the groove forming surface 110a by applying and baking the coating solution in a state where the groove forming surface 110a of the final-annealed steel sheet 110 is "directed downward".

Here, the coating solution contains, for example, a compound of phosphoric acid, phosphate, chromic anhydride, chromate, alumina, or silica. The baking may be performed, for example, under the conditions at 350°C to 1150°C for 5 seconds to 300 seconds.

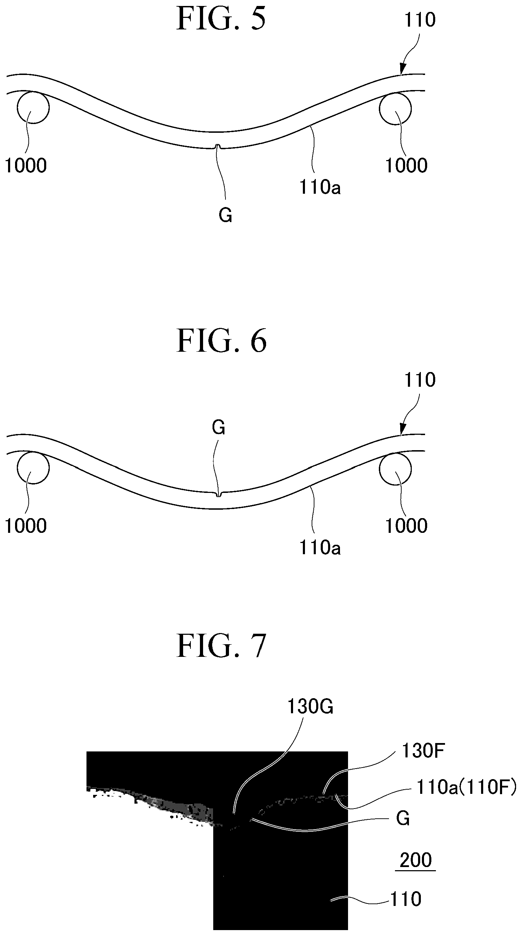

In describing the tension coating applying step S10 of the present embodiment in detail, first, problems of the conventional tension coating applying step will be described with reference to FIGS. 6 and 7.

FIG. 6 shows an example of a conventional tension coating applying step. In the example shown in FIG. 6, the final-annealed steel sheet 110 is conveyed by a conveying roller 1000. Here, the groove forming surface 110a is directed upward. Then, the coating solution is applied to the groove forming surface 110a from above the final-annealed steel sheet 110, and baking is performed. Therefore, the coating solution easily gatheres in the groove G. That is, a part of the coating solution applied to the groove forming surface 110a is retained inside the groove G in a liquid reservoir state. When baking is performed in this state, the insulating coating 130G inside the groove is formed to be thicker than the insulating coating 130F in the other portion (so-called flat surface 110F). FIG. 7 is an SEM photograph showing a cross-sectional structure of a grain-oriented electrical steel sheet 200 manufactured in a conventional tension coating applying step. As can be seen from the SEM photograph, the insulating coating 130G inside the groove is formed to be thicker than the insulating coating 130F in the other portion (so-called flat surface 110F).

The insulating coating 130G inside the groove tends to be formed to be excessively thicker than the insulating coating 130F of the flat surface 110F, and such an excessively thick insulating coating 130G is easily peeled off from the final-annealed steel sheet 110 as a base metal. That is, it is considered that the insulating coating 130G formed inside the groove is easily peeled off, and as a result, the effect of reducing the iron loss of the grain-oriented electrical steel sheet 200 is impaired.

Meanwhile, in the grain-oriented electrical steel sheet 200 in which the grooves G are formed, a magnetic flux that has reached one groove wall through the steel sheet leaks from the groove wall (that is, due to leakage of magnetic flux), thereby increasing magnetostatic energy, and the main magnetic domain is refined to reduce the magnetostatic energy, which causes a magnetic domain control effect.

However, in a state where tension is not applied to the steel sheet, a closure type magnetic domain is generated in the vicinity of the groove wall surface, and the increase in the magnetostatic energy described above is suppressed. Therefore, a sufficient magnetic domain control effect is not exhibited.

Due to the isotropic tension by the insulating coating, the closure magnetic domain becomes energetically unstable (due to the inverse effect of magnetostriction), so that the leakage of the magnetic flux is restored and the magnetic domain control effect is improved.

It is considered that the insulating coating formed thick in the groove part is easily peeled off, so that a sufficient tension effect cannot be applied to the steel sheet, or a stress in a direction in which the closure magnetic domain becomes unstable cannot be applied to the steel sheet.

In particular, when the coating solution is applied to the groove forming surface 110a of the final-annealed steel sheet 110, a catenary recessed upward (in other words, projected downward) is generated in the final-annealed steel sheet 110 by gravity. In this case, the insulating coating 130G inside the groove is more prone to be formed excessively thicker than the insulating coating 130F of the flat surface 110F. That is, as shown in FIG. 6, when the coating solution is applied in a state where the groove forming surface 110a is "directed upward", a liquid reservoir is easily formed in the groove G, and the thicker insulating coating 130G is formed inside the groove. Therefore, the insulating coating 130G formed inside the groove is easily peeled off, and the effect of reducing the iron loss is further greatly impaired.

On the other hand, in the tension coating applying step S10 according to the present embodiment, as shown in FIG. 5, the coating solution is applied to the groove forming surface 110a and baked in a state where the groove forming surface 110a of the final-annealed steel sheet 110 is "directed downward". Note that the point that the final-annealed steel sheet 110 is conveyed by the conveying roller 1000 is similar to that in the conventional tension coating applying step.

Also in the present embodiment, the point that the coating solution tends to gather in the groove G and the point that the final-annealed steel sheet 110 is provided with the catenary recessed upward by gravity are similar to those in the conventional tension coating applying step (that is, the step of applying the coating solution with the groove forming surface directed upward).

However, since the groove G faces downward, a part of the coating solution gathered inside the groove drops by gravity. Since the catenary has a downward convex shape, it is considered that the coating solution gathered inside the groove is more likely to drop. As a result, it is considered that the insulating coating 130G inside the groove becomes thinner than that in the conventional tension coating applying step after the baking is performed. That is, as a result of thinning the insulating coating 130G inside the groove, the insulating coating 130G is less likely to peel off inside the groove, and the effect of reducing the iron loss of the grain-oriented electrical steel sheet 200 is obtained. Furthermore, since the insulating coating 130G inside the groove can leak more magnetic flux, improvement of the effect of reducing the iron loss can be expected. As described in Examples described later, when the coating solution was applied with the groove forming surface 110a facing downward and baked, the groove part insulating coating peeling rate of the grain-oriented electrical steel sheet 200 could be reduced, and the iron loss was greatly reduced.

Here, in the tension coating applying step S10, the thickness t2 of the insulating coating 130G formed inside the groove is preferably 1/2 or less of the depth D of the groove G, and is preferably twice or less of a thickness t1 of the insulating coating 130F formed on the flat surface 110F of the final-annealed steel sheet 110 (that is, the base steel sheet). Hereinafter, this requirement is also referred to as "additional requirements of the thickness t2". The depth D and the thicknesses t1 and t2 are shown in FIG. 3. Here, t1 is to measure the thickness in the vertical direction with respect to the tangential direction of the steel sheet surface at the thickness measurement point. Similarly, t2 also measures the thickness in the vertical direction with respect to the tangential direction along the groove surface.

Here, the thickness t2 of the insulating coating 130G inside the groove is an average value of the thicknesses t2 measured at a plurality of places in the observed cross section of the groove G.

Similarly, the thickness t1 of the insulating coating 130F on the flat surface 110F is an average value of the thicknesses t1 measured at a plurality of places in the observed cross section.

A specific value of the thickness t1 of the insulating coating 130F is not particularly limited, and may be appropriately set according to characteristics and the like required for the grain-oriented electrical steel sheet 200, but is, for example, preferably 1 µm or more, and more preferably 2 µm or more. This is because when the thickness t1 of the insulating coating 130F is 1 µm or more, the corrosion resistance and further the insulation properties of the grain-oriented electrical steel sheet 200 can be further enhanced.

The thickness t1 of the insulating coating 130F is preferably 10 µm or less, and more preferably 5 µm or less. This is because when the thickness t1 of the insulating coating 130F is 10 µm or less, it is possible to prevent the space factor of the final-annealed steel sheet 110 from greatly decreasing.

It is preferable that the thickness t1, the thickness t2, and the depth D measured (determined) by the above method satisfy the above-described "additional requirements of the thickness t2". In the tension coating applying step S10, as described above, the thickness t2 becomes thinner than that in the conventional tension coating applying step in which the groove forming surface is directed upward, and thus, for example, the above-described "addition requirements of the thickness t2" may be achieved by appropriately changing one or more of the application amount, viscosity, and concentration of the coating solution to be applied, the application method (application by a roll coater or the like is exemplified as the application method), the time from application to baking, and the conditions such as air spray for removing a part of the coating solution.

Note that the tension coating applying step S10 may be performed on a line different from the other steps (that is, offline), or may be performed on the same line (that is, online). In the groove forming step S9 described above, when the groove G is formed on the lower surface of the final-annealed steel sheet 110, the final-annealed steel sheet 110 can be directly subjected to the tension coating applying step S10. That is, the tension coating applying step S10 can be performed inline.

On the other hand, when the groove G is formed on the upper surface of the final-annealed steel sheet 110 in the groove forming step S9, the final-annealed steel sheet 110 is once wound, and then the final-annealed steel sheet 110 is turned upside down, and the final-annealed steel sheet 110 may be subjected to the tension coating applying step S10. In this case, the tension coating applying step S10 may be performed offline or inline.

### [Examples]

In the present example, the effect of the method for manufacturing a grain-oriented electrical steel sheet according to the present embodiment described above was verified. Of course, the present invention is not limited to the embodiments described below. It is obvious that a person having ordinary knowledge in the technical field to which the present invention belongs can conceive various changes or modifications within the scope of the technical idea described in the claims, and it is naturally understood that these also belong to the technical scope of the present invention.

First, by performing the casting step S1 to the final annealing step S8 described above, the final-annealed steel sheet 110 with a sheet thickness of 0.23 mm and a high magnetic flux density in which the value of a magnetic flux density B₈ at 800 A/m is 1.93 T was manufactured.

Next, this final-annealed steel sheet 110 was irradiated with a fiber laser with an elliptical beam shape of 20 µm in the rolling direction and 40 µm in the width direction of the steel sheet and with a beam power of 2.5 kW, thereby forming a groove G on the surface of the final-annealed steel sheet 110. Here, the scanning speed was set to 15 m/s, and linear grooves G with a width w of about 50 µm and a depth D of about 20 µm were formed at intervals of 3 mm in a direction perpendicular to the rolling direction.

Subsequently, the coating solution was applied and baked in the manner shown in Table 1. Here, a coating solution containing a mixture containing aluminum phosphate and magnesium phosphate and containing 40 to 70 parts by mass of colloidal silica with respect to 100 parts by mass of the mixture in terms of solid content was used as the coating solution.

In Table 1, the "groove forming surface direction during baking" indicates the direction (upper side or lower side) of the groove forming surface 110a when the coating solution is applied. The coating solution was dropped from above the steel sheet, and applied with a normal natural coater.

The coating solution application amount indicates the mass (g/m²) of the solid content of the coating solution applied per unit area of the groove forming surface 110a in plane view. When it is desired to measure the coating solution application amount from the dried insulating coating, the grain-oriented electrical steel sheet is immersed in a heated alkaline solution (NaOH solution or the like) to dissolve the insulating coating in the alkaline solution. Then, the coating solution application amount can be specified from the mass of the insulating coating dissolved in the alkaline solution.

Next, the depth D (µm) of the groove G, the thickness t2 (µm) of the insulating coating 130G inside the groove, the thickness t1 (µm) of the insulating coating 130F of the flat surface 110F, the groove part insulating coating peeling rate (area %), the magnetic flux density B₈ (T), and the iron loss W17/50 (W/kg) were measured. The method of measuring the depth D (µm) of the groove G, the thickness t2 (µm) of the insulating coating 130G inside the groove, and the thickness t1 (µm) of the insulating coating 130F of the flat surface 110F is as described above. Table 1 shows the results.

Here, the "groove part insulating coating peeling rate" refers to the area fraction of the portion where the insulating coating is peeled off with respect to the total area of the groove G in plane view. Whether or not the insulating coating was peeled off was determined by the area fraction of the exposed steel sheet surface. Specifically, a case where the area fraction of the exposed steel sheet surface was 10% or more was determined to be failed.

**[Table 1]**

| | Groove forming surface direction during baking | Coating application amount (g/m²) | Groove depth (µm) | t1 (µm) | t2 (µm) | Groove part coating peeling rate (area %) | Magnetic flux density B₈ (T) | Iron loss W17/50 (W/kg) | Division |
|---|---|---|---|---|---|---|---|---|---|
| Experimental No. 1 | Downward | 2.6 | 20 | 2.5 | 4.7 | 0 | 1.90 | 0.75 | Invention example |
| Experimental No. 2 | Downward | 4.6 | 19 | 3.8 | 6.3 | 2 | 1.91 | 0.73 | Invention example |
| Experimental No. 3 | Downward | 3.2 | 20 | 3.1 | 5.8 | 0 | 1.90 | 0.74 | Invention example |
| Experimental No. 4 | Downward | 3.8 | 19 | 3.5 | 8.2 | 5 | 1.90 | 0.76 | Invention example |
| Experimental No. 5 | Upward | 3.4 | 21 | 3.3 | 11.4 | 12 | 1.90 | 0.77 | Comparative example |
| Experimental No. 6 | Upward | 2.5 | 20 | 2.5 | 8.6 | 10 | 1.91 | 0.79 | Comparative example |
| Experimental No. 7 | Upward | 4.2 | 19 | 3.7 | 12.4 | 15 | 1.90 | 0.78 | Comparative example |

As is apparent from Table 1, in the grain-oriented electrical steel sheets (Experimental Nos. 1 to 4) manufactured by the method for manufacturing a grain-oriented electrical steel sheet according to the present embodiment, the coating solution was applied and baked in a state where the groove forming surface of the final-annealed steel sheet faces downward, so that coating defects were few and the iron loss was reduced.

On the other hand, in the grain-oriented electrical steel sheets (Experimental Nos. 5 to 7) manufactured by a conventional method for manufacturing a grain-oriented electrical steel sheet, the coating solution was applied and baked in a state where the groove forming surface of the final-annealed steel sheet faces upward, so that coating defects were many and the iron loss was increased.

Experimental Nos. 1 to 3 satisfy the "additional requirements of thickness t2". Also in this respect, it is considered that the iron loss was low in the invention examples in Experimental Nos. 1 to 3.

However, since the thickness of the coating inside the groove was more than twice the thickness formed on the flat surface of the steel sheet, in Experimental No. 4 that did not satisfy the "additional requirements of thickness t2", the iron loss was slightly higher as compared with Experimental Nos. 1 to 3.

As described above, according to the present embodiment, in a state where the groove forming surface 110a of the final-annealed steel sheet 110 (or cold-rolled steel sheet) faces downward, a coating solution containing a compound of phosphoric acid, phosphate, chromic anhydride, chromate, alumina, or silica is applied and baked to form an insulating coating on the groove forming surface 110a. In the grain-oriented electrical steel sheet 200 manufactured by this manufacturing method, since the insulating coating 130G inside the groove becomes thin, peeling is less likely to occur. Therefore, coating defects are few, and the iron loss is reduced.

Here, in the tension coating applying step S10, the thickness t2 of the insulating coating 130G may be adjusted so that the thickness t2 of the insulating coating 130G formed inside the groove becomes 1/2 or less of the depth D of the groove G, and becomes twice or less of the thickness t1 of the insulating coating 130F formed on the flat surface 110F of the final-annealed steel sheet 110 (or cold-rolled steel sheet). In this case, since the insulating coating 130G inside the groove becomes thinner, the iron loss of the grain-oriented electrical steel sheet 200 is further reduced.

Further, after the cold rolling step and before the final annealing step, an annealing separator applying step of applying an annealing separator to the cold-rolled steel sheet may be further performed. Moreover, the annealing separator may contain magnesia. In this case, the characteristics of the grain-oriented electrical steel sheet 200 are further improved.

Although the preferred embodiments of the present invention have been described in detail, the present invention is not limited to such examples. It is obvious that a person having ordinary knowledge in the technical field to which the present invention belongs can conceive various changes or modifications within the scope of the technical idea of the present application, and it is naturally understood that these also belong to the technical scope of the present invention.

### Field of Industrial Application

According to the present invention, it is possible to obtain a grain-oriented electrical steel sheet with few coating defects and a low iron loss.

### Brief Description of the Reference Symbols

110 Final-annealed steel sheet
110F Flat surface
110G Groove wall surface
130 Insulating coating (tension coating)
130F Insulating coating on flat surface
130G Insulating coating inside groove
200 Grain-oriented electrical steel sheet

## Claims

1. A method for manufacturing a grain-oriented electrical steel sheet comprising:
a cold rolling step of manufacturing a cold-rolled steel sheet;
a final annealing step of performing final annealing accompanied by secondary recrystallization on the cold-rolled steel sheet;
a groove forming step of linearly forming a groove in a direction intersecting a rolling direction of the cold-rolled steel sheet with respect to the cold-rolled steel sheet before or after the final annealing step; and
a tension coating applying step of forming a tension coating on a groove forming surface by applying and baking a coating solution containing a compound of phosphoric acid, phosphate, chromic anhydride, chromate, alumina, or silica, in a state where the groove forming surface of the cold-rolled steel sheet faces downward.

2. The method for manufacturing a grain-oriented electrical steel sheet according to claim 1, wherein in the tension coating applying step, a thickness of the tension coating is adjusted such that the thickness of the tension coating formed inside the groove is 1/2 or less of a depth of the groove, and is twice or less of the thickness of the tension coating formed on a flat surface of the cold-rolled steel sheet.

3. The method for manufacturing a grain-oriented electrical steel sheet according to claim 1 or 2, further comprising an annealing separator applying step of applying an annealing separator to the cold-rolled steel sheet after the cold rolling step and before the final annealing step,
wherein the annealing separator contains magnesia.

4. A grain-oriented electrical steel sheet manufactured by the method for manufacturing a grain-oriented electrical steel sheet according to any one of claims 1 to 3.
